# EUROPEAN PATENT SPECIFICATION

(11) **EP 2 421 078 B1**
(45) Date of publication and mention of the grant of the patent: **09.10.2019**
(21) Application number: 11177861.9
(22) Date of filing: 17.08.2011
(51) Int. Cl.: H01M 8/0612, H01M 8/0662, H01M 8/04014, H01M 8/04119, H01M 8/22

(54) **Fuel cell power and water generation**
Brennstoffzellenenergie- und -wassererzeugung
Génération d'eau et d'électricité dans une pile à combustible

(30) Priority: 20.08.2010 US 859976
(43) Date of publication of application: 22.02.2012
(73) Proprietor: The Boeing Company, Chicago, IL 60606-1596 (US)
(72) Inventor: Atreya, Shailesh, Irvine, CA 92619 (US); Whelan, David, Newport Coast, CA 92657 (US); Mata, Marianne E., Dana Point, CA 92629 (US); Stoia, Tina R., Rancho Santa Margarita, CA 92688 (US); Gill, David, Huntington Beach, CA 92648 (US)
(74) Representative: Boult Wade Tennant LLP

(56) References cited:
- EP-A2- 2 088 638
- WO-A1-99/61369
- FR-A1- 2 899 020
- US-A1- 2005 053 806
- US-A1- 2005 181 247
- US-A1- 2007 212 582
- US-A1- 2008 028 675
- US-A1- 2010 055 508
- XUAN J ET AL: "A review of biomass-derived fuel processors for fuel cell systems", RENEWABLE AND SUSTAINABLE ENERGY REVIEWS, ELSEVIERS SCIENCE, NEW YORK, NY, US, vol. 13, no. 6-7, 1 August 2009 (2009-08-01), pages 1301-1313, XP026049131, ISSN: 1364-0321, DOI: 10.1016/J.RSER.2008.09.027 [retrieved on 2008-11-04]

## Description

### Background

Many remote bases or other facilities utilize fuel cells for the generation of power. For example, in military applications, forward operating bases are often set up at remote locations not serviced by a fixed power grid. Fuel cells provide one means for supplying the necessary power to sustain the base operations. Similarly, in civilian applications such as disaster response scenarios, power generation is a critical consideration for response teams since permanent power grids are commonly unavailable. Like power, water is another integral component for sustaining operations at many remote locations. Many remote locations do not have the functional infrastructure to provide electricity or water, or the fuel necessary to generate the required electricity.

Due to the lack of suitable infrastructure at many of these locations, fuel and water must be transported to the forward operating bases or emergency response locations, often over great distances. Transporting these items via aircraft, trains, ships, trucks and/or other vehicles is a costly and often dangerous operation. In the military context, for example, fuel and water make up a significant portion of the cargo that is trucked to remote bases. The convoys associated with these shipments not only operate at a significant expense corresponding to fuel, vehicle maintenance, and manpower, but also operate in hostile environments.

It is with respect to these considerations and others that the disclosure made herein is presented.

In "A review of biomass-derived fuel processors for fuel cell systems", by Jin Xuan, et al, RENEWABLE AND SUSTAINABLE ENERGY REVIEWS, vol. 13, no 6-7, August 2009, pages 1301 -1313, there is described a review of the biomass-derived fuel processing technologies from various perspectives including the feedstock, reforming mechanisms, catalysts, and processor configurations.

In FR2899020 A1, there is described a module having a steam reformer e.g. catalytic steam reformer, mounted in upstream of a proton exchange membrane type fuel cell. The reformer produces hydrogen rich gas from water vapor and hydrocarbon fuel. A catalytic burner is supplied with an anodic gas obtained from the cell, oxygen rich gas and/or fuel and is in thermal contact with the reformer. A vapor generator e.g. microstructred exchanger, is supplied with water and produces water vapor. Another catalytic burner is supplied with burned gas obtained from the former burner and with the fuel.

In United States Patent Application Publication US2008/028675A1, there is described a method, system, apparatus and program that extracts energy from organic residual materials produced by the manufacturing of biofuels. Energy is extracted from the biofuels residuals using anaerobic bioconversion to produce a fuel for use in the manufacturing process for producing synthetic biofuel or as an additional energy product for sale comprises: providing at least one bioconversion tank for conversion of organic waste material, the bioconversion tank containing an active biomass comprising at least one bacteria that decomposes organic material; providing at least one inlet to the bioconversion for organic material; a processor that receives and stores information on: the status of chemical oxygen demand of the active biomass; and the oxygen provision capability of any organic material that can be fed into the bioconversion tank through an inlet; a mass flow control system controlled by the processor which feeds at least one organic material through an inlet at a rate based at least in part upon the status of chemical oxygen demand in the bioconversion tank as recognized by the processor.

### Summary

Various aspects and embodiments of the invention are set out in the appended claims.

Methods and systems described herein provide for the creation of power, water, and heat utilizing a fuel cell system. According to one example of the disclosure provided herein, and useful for understanding the invention, fuel is received and utilized within a fuel cell to generate power and a fuel byproduct. Multiple fuel types may be used, such as natural gas, military logistics fuel (e.g. JP5, JP8 etc.), hydrogen, and others. Water is separated from the fuel byproduct to create a conditioned fuel byproduct and water. The conditioned fuel byproduct is burned or otherwise reacted to create heat or electricity. The power, water, and heat are provided for use within these and other systems, or for general consumption.

According to another example, a power and water generation system includes a fuel cell, a byproduct separation phase, and a burner phase. The byproduct separation phase is positioned downstream of the fuel cell and is configured to separate water from the fuel byproduct to create water and a conditioned fuel byproduct. The burner phase is positioned downstream of the byproduct separation phase and is configured to burn the conditioned fuel byproduct to create heat that can be used within the power and water generation system, or outside of the system.

According to yet another example, a power and water generation system includes a biofuel production subsystem, a fuel conditioner phase, a fuel cell, a byproduct separation phase, and a burner phase. The biofuel production subsystem utilizes water from the byproduct separation phase and other biofuel production ingredients to create a biofuel to be used by the fuel cell in the generation of power and ultimately water. The fuel conditioner phase prepares the biofuel for consumption by the fuel cell. The fuel cell converts the conditioned biofuel to power and a fuel byproduct. The byproduct separation phase is positioned between the fuel cell and the burner phase and is configured to remove water from the fuel byproduct and to provide the water to the biofuel production subsystem. The remaining mixture may be combusted in the burner phase to create heat that may be converted to mechanical energy or used in other processes or otherwise reacted to produce electricity. The fuel cell may comprise a SOFC, where the burner phase may comprise a turbo-compressor configured to transform the heat to mechanical energy, and where the burner phase is thermally coupled to the fuel conditioner phase to provide heat to the fuel conditioner phase during creation of the conditioned fuel.

The features, functions, and advantages that have been discussed can be achieved independently in various embodiments of the present invention or may be combined in yet other embodiments, further details of which can be seen with reference to the following description and drawings. The invention is defined in independent method claim 1 and independent product claim 7.

### Brief Description Of The Drawings

FIGURE 1 is a block diagram showing a comparison between a conventional power and water supply system to a fuel cell power and water generation system presented herein;
FIGURE 2 is a block diagram showing a fuel cell power and water generation system presented herein;
FIGURE 3 is block diagram showing fuel conditioner, byproduct separation, and burner phases of a fuel cell power and water generation system presented herein;
FIGURE 4 is a block diagram showing an illustrative fuel cell power and water generation system utilizing biofuel created with generated water presented herein; and
FIGURE 5 is a flow diagram illustrating a method for generating power and water with a fuel cell system presented herein.

### Detailed Description

The following detailed description is directed to methods and systems for creating and capturing usable water during highly efficient electrical power generation. As discussed briefly above, transporting large quantities of fuel and water to forward operating bases and other remote locations is a costly and inefficient process. Utilizing the concepts and technologies described herein, a fuel cell generation system is used not only to generate electrical power, but also to generate water that may be easily filtered for potable uses or to be routed in all or part into a biofuel creation process to generate the fuel used within the fuel cell for creating electricity.

Throughout this disclosure, the various embodiments will be described with respect to use with a military forward operating base, such as would be used by military forces on a temporary or semi-permanent basis at a remote location that does not have permanent infrastructure capable of providing power and water. However, it should be understood that the disclosure provided herein is equally applicable to any type of application in which it is desirable to generate power and water in an efficient manner that decreases the quantity fuel and water that is required to be transported to the use location from a remote source location. Similarly, because the concepts described below increase the efficiency of power and water generation, the various embodiments are also suitable for any implementations in which the transportation of resources is not an issue, but in which it is desirable to operate at a lower cost, with versatility as to the type of fuel used within the system, and at decreased noise levels, as will be described in detail below.

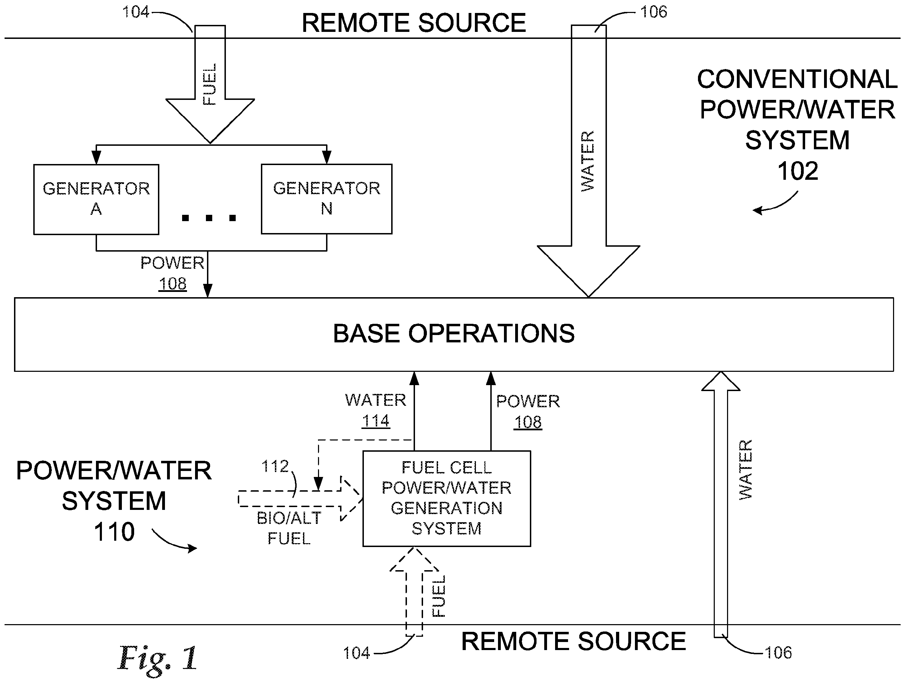

In the following detailed description, references are made to the accompanying drawings that form a part hereof, and which are shown by way of illustration, specific embodiments, or examples. Referring now to the drawings, in which like numerals represent like elements through the several figures, the efficient generation of electricity and water, among other functional byproducts such as the heated exhaust, will be described. FIGURE 1 shows a comparison between a conventional power and water supply system 102 to a fuel cell power and water generation system 110 in the context of supplying power 108 and water 106/114 to support the operations of a forward operating base or other operations according to various embodiments presented herein.

A conventional power and water supply system 102 typically includes a number of generators A-N that are used to supply power 108 to base operations. To operate the generators A-N, fuel 104 is shipped in from a remote source and stored in fuel bladders at the forward operating base. Because a conventional power generation system does not generate usable water, the water 106 is shipped from a remote source and stored in bladders for use at the base.

In contrast, referring to the bottom portion of FIGURE 1, a fuel cell power and water generation system 110 as described herein utilizes one or more fuel cells to create and supply the power 108 to the base. The fuel cell utilizes fuel 104 to create the power 108. As will be described further below, the fuel 104 is a biofuel. In other examples useful for understanding the invention, the fuel may be a standard military fuel, such as JP-8 commonly used in military aircraft and other vehicles or a commercial fuel, such as propane or natural gas. The generation of power 108 by the fuel cell creates a byproduct, which is typically burned off in an afterburner to create a hot exhaust product that may be used to turn a turbine or to heat a product or process.

Utilizing the embodiments described below, the water 114 is separated from the byproduct of the fuel cell prior entry into the burner phase. This water 114 can be provided for various base operations, or all or part of the water 114 may be used for creation of a fuel 112, including biofuels and other alternative fuels, to be used within the fuel cell power and water generation system 110. According to various implementations, the water 114 created by the fuel cell power and water generation system 110 may be of quantities that meet or exceed the water consumption demand of the base, or at a minimum, will decrease the amount of water 106 required to be supplied to the base from a remote source.

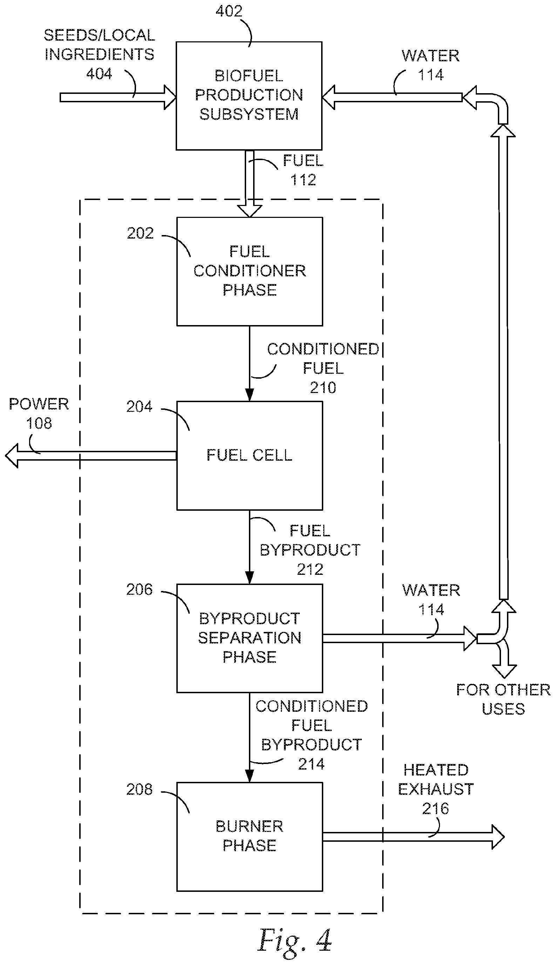

Along with decreasing the water 106 quantities shipped to the base from the remote source, the fuel cell power and water generation system 110 allows for a decrease in the quantity of fuel 104 shipped to the base due to the increase in efficiency of the fuel cell power and water
generation system 110 as compared to a comparable conventional generator system as described above. Moreover, the fuel cell power and water generation system 110 may be coupled to renewable energy sources such as solar and wind power sources to provide energy during daylight periods, further reducing the quantities of fuel 104 necessary to maintain base operations. The external fuel 104 requirements may be completely eliminated in various embodiments that utilize biofuel creation and utilization, particularly when used in combination with renewable energy sources, as described in greater detail below with respect to FIGURE 4.

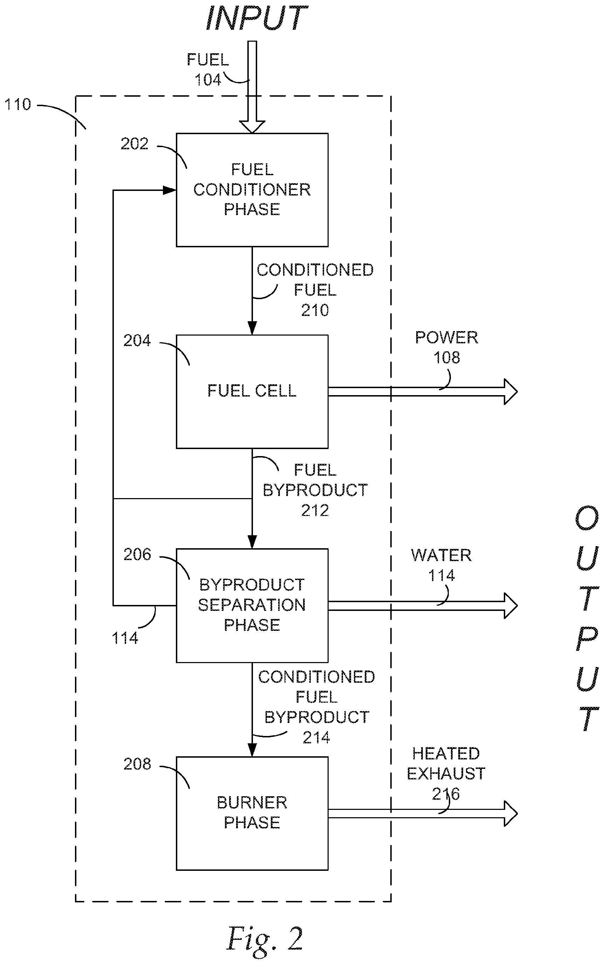

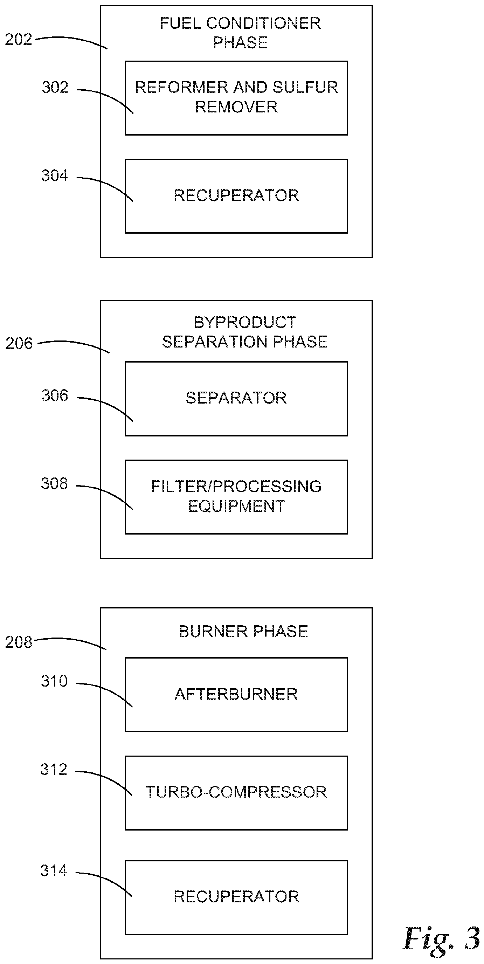

Turning now to FIGURE 2, a fuel cell power and water generation system 110 will be described in further detail. According to one embodiment, the fuel cell power and water generation system 110 includes a fuel conditioning phase 202, one or more fuel cells 204, a byproduct separation phase 206, and a burner phase 208. In general, the fuel cell power and water generation system 110 receives fuel 104 as input and produces power 108, water 114, and a heated exhaust stream 216. Fuel 104 is a biofuel. In other examples useful for understanding the invention, the fuel may be JP-8 or other military fuel, gasoline, hydrogen, butane, methanol, propane, or natural gas. Fuel 104 is provided to the fuel conditioner phase 202 of the fuel cell power and water generation system 110. The fuel conditioner phase 202 includes all applicable equipment and systems used to prepare the fuel 104 for efficient use by the fuel cell 204. Specific examples of components of the fuel conditioner phase 202, as well as of the byproduct separation phase 206 and the burner phase 208, will be described below with respect to FIGURE 3.

After conditioning, the conditioned fuel 210 is routed to the fuel cell 204, where it is used to create electricity, or power 108. The electrical power created by the fuel cell 204 may be direct current, but may be directed to an inverter to convert to alternating current for use with corresponding alternating current systems. It should be appreciated that although the fuel cell 204 is shown as a single generic unit for simplicity, any number and type of fuel cells 204 may be utilized within the fuel cell power and water generation system 110. As an example, the fuel cell may include one or more solid oxide fuel cells (SOFCs). One advantage other than the operating efficiency and the corresponding cost savings associated with utilizing SOFCs to generate power within the fuel cell power and water generation system 110 as compared to utilizing the generators used in a conventional power and water supply system 102 is noise reduction. Power and water generation utilizing SOFCs rather than the traditional diesel/gas generators occurs at significantly reduced noise levels.

One byproduct of the power generation process within the fuel cell 204 is a fuel byproduct 212 that contains water vapor. Traditionally, this mixture of unutilized broken down fuel and water is routed directly to an afterburner, where the resulting exhaust stream is burned with incoming air to produce heat energy that can be captured with a turbine or used for some other purpose. However, according to the disclosure provided herein, the fuel byproduct 212 is directed at least in part to the byproduct separation phase 206, where the water vapor is separated from the unused fuel mixture of the fuel byproduct 212 to create the water 114. After proper filtering and purification, this water 114 is potable and ready for consumption or other use by base personnel. It should be noted that a portion of the fuel byproduct 212, or water 114, may be routed back to the fuel conditioner phase 202 after leaving the fuel cell 204 for reconditioning and use within the fuel cell 204. Alternatively, this reutilized fuel may be apportioned from the conditioned fuel byproduct 214 leaving the byproduct separation phase rather than from the fuel byproduct 212 after the fuel cell 204.

After separating the water 114 from the fuel byproduct 212, the remaining conditioned fuel byproduct 214 is burned within the burner phase 208 to create heated exhaust 216 or otherwise reacted to produce electricity. The heated exhaust 216 may be an exhaust stream that may be used in conjunction with a turbine or may be used to inject heat into a process. For example, the conditioner phase 202 and corresponding fuel conditioning process may include an endothermic process in which the heated exhaust 216 may be used.

Positioning the byproduct separation phase 206 in-line between the fuel cell 204 and the burner phase 208 has advantages over attempting to separate water 114 from the mixture after the burner phase 208. First, the water 114 after the burner phase 208 would be significantly more polluted since the burning process would introduce contaminants such as soot. Second, because air is being mixed in during the combustion within the burner phase 208, the water vapor is being diluted, which reduces the partial pressure of the water vapor. By separating the water vapor from the fuel byproduct 212 before the burner phase, then the partial pressure of the water vapor is much higher, allowing for a greater amount of water 114 to be separated efficiently from the mixture.

It should be understood that the block diagram of FIGURE 2 is a simplified representation of the various phases and components of a fuel cell power and water generation system 110 according to embodiments discussed herein. Some exemplary components of the fuel conditioner phase 202, byproduct separation phase 206, and burner phase 208 will be described below with respect to FIGURE 3. However, the specific equipment utilized will depend on the particular implementation. Equipment and controls that are not germane to the concepts described herein have been omitted for clarity. For example, the fuel cell power and water generation system 110 includes power distribution and control hardware, various system controls, and other balance of plant hardware that has not been shown or described.

Referring to FIGURE 3, the fuel conditioner phase 202, byproduct separation phase 206, and burner phase 208 will be described in further detail. According to one embodiment, the fuel conditioner phase 202 includes a reformer, such as a steam reformer, and sulfur remover 302. The fuel reformation and sulfur removal breaks down the fuel 104 to various species that maximize the efficiency of the particular fuel cell 204 utilizing the fuel. The particular characteristics and operating parameters of the reformer and sulfur remover 302 depends on the type of fuel 104 being used and the characteristics of the fuel cell 104 processing the fuel. The fuel conditioner phase 202 may additionally include a recuperator to further increase the efficiency of the fuel processing prior to delivery of the fuel to the fuel cell 204.

The byproduct separation phase 206 includes a separator 306 operative to separate the water vapor from the unutilized fuel and other byproducts within the fuel byproduct 212 from the fuel cell 204. Additional filtering and purifying equipment 308 is utilized to further process the separated water to create the potable water 114 for use by base personnel and for base operations. The burner phase 208 utilizes an afterburner 310 to combust the conditioned fuel byproduct 214 and create heated exhaust 216. The created heated exhaust stream 216 may be routed to a turbo-compressor 312 within the burner phase 208, where the heated exhaust 216 is transformed to mechanical energy. A recuperator or heat exchanger 314 may again be used to increase the efficiency of the turbo-compressor 312 operation. As mentioned above, the fuel cell power and water generation system 110 and corresponding fuel conditioner 202, byproduct separation 206, and burner phases 208, may include additional or fewer components than shown and described in the accompanying figures without departing from the scope of this disclosure.

FIGURE 4 shows an embodiment of the invention in which the fuel cell power and water generation system 110 includes a biofuel production subsystem 402. As discussed above with respect to FIGURE 1, the fuel cell power and water generation system 110 is configured to utilize alternative fuels 112, such as biofuels. The manufacturing process for creating a biofuel can occur at the forward operating base using seeds and/or ingredients 404 that are locally found, grown, or purchased. In doing so, the reliance on importing fuel to the forward operating base is diminished or eliminated. The creation of the biofuel typically requires water. According to one embodiment shown in FIGURE 4, the water 114 that is created and captured by the fuel cell power and water generation system 110 is returned to the biofuel production subsystem 402 to be used in the fuel manufacturing process. Any surplus water 114 not used by the biofuel production subsystem 402 may be routed to other base operations.

Depending on the quantity of water 114 needed to produce the required quantity of fuel 112, the fuel cell power and water generation system 110 could be a substantially stand alone, self-sustaining power and water generation process with respect to fuel and water requirements. The biofuel production subsystem would require the additional seeds and/or ingredients 404 to produce the fuel 112, but would require very little to no fuel 104 and/or water 106 to be shipped to the base from a remote source. As the seeds and/or ingredients 404 may presumably be procured locally, the convoys conventionally used to ship fuel and water from remote sources may be significantly reduced or eliminated.

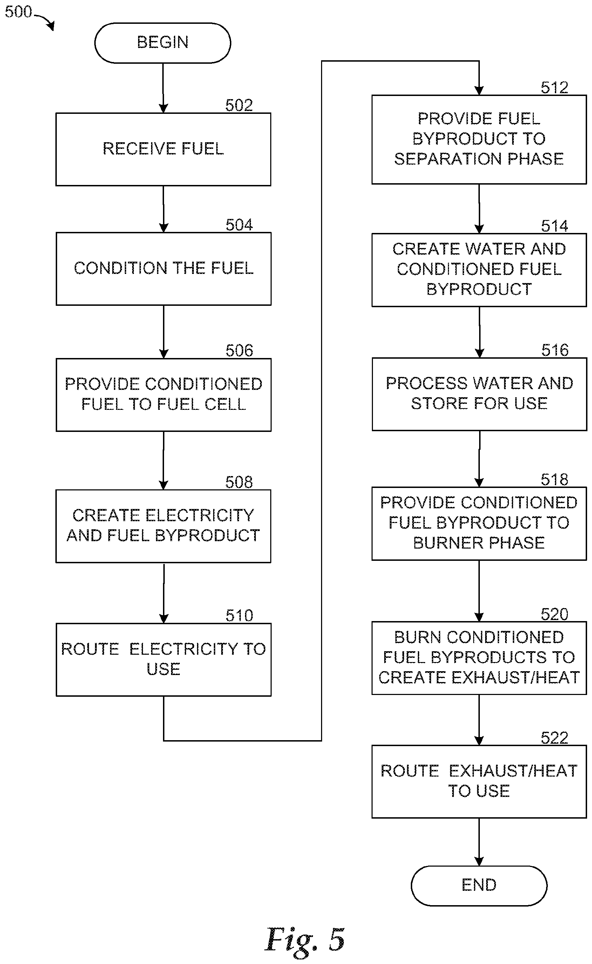

Turning now to FIGURE 5, an illustrative routine 500 for creating electrical power and water, while recapturing waste heat, will now be described in detail. It should be appreciated that more or fewer operations may be performed than shown in the FIGURE 5 and described herein. Moreover, these operations may also be performed in a different order than those described herein. The routine 500 begins at operation 502, where the fuel is received. As discussed above, the fuel 104 is a biofuel such as a biofuel produced by a biofuel production subsystem 402 as described with respect to FIGURE 4. In other examples useful for understanding the invention, the fuel may be standard military fuel such as JP-8 or commercial fuel such as gasoline, hydrogen, butane, methanol, propane, or natural gas..

From operation 502, the routine 500 continues to operation 504, where the fuel 104 enters the fuel conditioner phase 202 of the fuel cell power and water generation system 110. In the fuel conditioner phase 202, operations such as reformation and sulfur removal prepare the fuel for efficient use by the fuel cell 204, creating conditioned fuel 210. At operation 506, the conditioned fuel 210 enters the fuel cell 204, where it reacts to create power 108 and a fuel byproduct 212 at operation 508. The resulting electricity is routed to the use or storage locations at operation 510.

The routine 500 continues from operation 510 to operation 512, where the fuel byproduct 212 exiting the fuel cell 204 is provided to the byproduct separation phase 206 of the fuel cell
power and water generation system 110. The byproduct separation phase 206 may include any quantity and type of equipment suitable for reclaiming and processing the water 114 from the mixture leaving the fuel cell 204. As discussed above, this equipment may include a separator 306 to separate and condense the water vapor, and filtering and processing equipment to make the water 114 potable and ready for use. The water 114 is processed and stored for use at operation 516.

After separating the water 114 from the fuel mixture, the resulting conditioned fuel byproduct 214 is routed to the burner phase 208 of the fuel cell power and water generation system 110 at operation 518. The conditioned fuel byproduct 214 is burned in the afterburner or reacted in another manner 310 at operation 520 to create the heated exhaust stream 216. This exhaust stream is routed to the turbo-compressor 312 or other system at operation 522 to recoup the heat in the heated exhaust stream 216 as mechanical energy or to inject heat into another system or process, further increasing the efficiency of the fuel cell power and water generation system 110, and the routine 500 ends.

It should be clear from the above disclosure that the fuel cell power and water generation system 110 described herein and encompassed by the claims below provides a significant improvement in operating efficiency over conventional systems, effectively reducing operating costs, reducing logistical costs associated with transporting fuel and water, and decreasing the risks corresponding with the transportation of fuel and water to forward operating bases. The fuel cell power and water generation system 110 utilizes fuel cell technology to increase the flexibility of the system to accept various fuels 104 and to efficiently produce power 108, reducing the fuel consumption rates of the base as compared to traditional generator sets. The use of fuel cell technology additionally reduces the noise levels associated with traditional diesel/gas generators.

The water reclamation aspects of the fuel cell power and water generation system 110 allow for the removal of water 114 from the fuel waste created during the production of power 108 by the fuel cell 204. By separating the water 114 prior to the burner phase 208 of the fuel cell power and water generation system 110, the water vapor has a higher partial pressure, which allows for increased water recovery efficiency. Separating the water vapor from the unutilized fuel mixture prior to burning the mixture additionally results in cleaner water 114 than would be available after the burner phase 208, simplifying and assisting the water processing operations to create potable water.

As the fuel cell power and water generation system is coupled with a biofuel production subsystem 402, the fuel cell power and water generation system 110 may significantly reduce or eliminate the need for fuel 104 to be shipped to the forward operating base for power production and the water 114 recaptured during the byproduct separation phase 206 can be cycled into the biofuel production subsystem 402 to significantly reduce or eliminate the need for water 106 from a remote source for fuel production. Utilizing biofuel to fuel the fuel cell power and water generation system 110, further combined with the use of renewable energy sources such as solar and wind power at the forward operating base, provides an extremely efficient, stand alone energy and water production system.

Finally, recaptured heated exhaust 216 from the burner phase 208 of the fuel cell power and water generation system 110 may be utilized to further increase the efficiency of the overall system. The heated exhaust 216 may be used to drive a turbo-compressor 312, may be used in other components of the fuel cell power and water generation system 110, or used in other base systems or processes.

Various modifications and changes may be made to the subject matter described herein without following the example embodiments and applications illustrated and described, and without departing from the following claims.

## Claims

1. A method for generating water and power within a fuel cell system (110), the method comprising:
producing biofuel (112) in a biofuel creation subsystem (402);
receiving and utilizing the biofuel within a fuel cell (204) to generate power (108) and a fuel byproduct (212);
separating water from the fuel byproduct to create a conditioned fuel byproduct (214) and water (114);
burning the conditioned fuel byproduct to create heat; and
providing the power, the water, and the heat for use;
wherein providing the water for use comprises providing the water to the biofuel creation subsystem for production of the biofuel wherein the method further comprises conditioning the fuel prior to utilization in the fuel cell to create conditioned fuel for the fuel cell.

2. The method of claim 1, wherein conditioning the fuel prior to utilization comprises reforming the fuel and removing sulfur from the fuel.

3. The method of any of claims 1- 2, wherein separating the water from the fuel byproduct comprises routing the fuel byproduct to a separator (306) and separating the water vapor from the fuel byproduct.

4. The method of claim 1, wherein burning the conditioned fuel byproduct comprises providing the conditioned fuel byproduct to an afterburner (310) and combusting the conditioned fuel byproduct to create an exhaust flow (216).

5. The method of any of claims 1-4, further comprising routing the exhaust flow through a turbo-compressor (312) to transform heat energy to mechanical energy.

6. The method of claim 5, further comprising routing the exhaust flow to a fuel conditioner phase (202) of the fuel cell system and provide heat to an endothermic reformation process of the fuel conditioner phase.

7. A power and water generation system (110), comprising:
a biofuel production subsystem configured to produce a biofuel;
a fuel cell configured to convert the biofuel into power and a fuel byproduct;
a byproduct separation phase (206) positioned downstream of the fuel cell and configured to separate water from the fuel byproduct to create water and a conditioned fuel byproduct; and
a burner phase (208) positioned downstream of the byproduct separation phase and configured to burn the conditioned fuel byproduct to create heat,
wherein the biofuel production subsystem is configured to receive the water to produce the biofuel for use by the fuel cell;
wherein the power and water generation system further comprises a fuel conditioner phase configured to condition the fuel to create conditioned fuel for the fuel cell.

8. The power and water generation system of claim 7, wherein the byproduct separation phase comprises a separator configured to separate water from the fuel byproduct to create the water.

9. The power and water generation system of claim 8, wherein the byproduct separation phase further comprises water processing equipment configured to produce potable water from the water.

10. The power and water generation system of any of claims 7 - 9, wherein the burner phase comprises an afterburner or a turbo-compressor, the afterburner being configured to combust the conditioned fuel byproduct with air to create an exhaust flow comprising the heat and the turbo-compressor being configured to transform the exhaust flow to mechanical energy.

11. The power and water generation system of claim 10, wherein the burner phase is thermally coupled to the fuel conditioner phase, the fuel conditioner phase comprising a reformer configured to condition the biofuel for the fuel cell.

## Patentansprüche

1. Verfahren zum Erzeugen von Wasser und Energie innerhalb eines Brennstoffzellensystems (110), wobei das Verfahren umfasst:
Erzeugen von Biokraftstoff (112) in einem Biokraftstofferzeugungs-Subsystem (402);
Aufnehmen und Verwenden des Biokraftstoffs in einer Brennstoffzelle (204), um Energie (108) und ein Kraftstoffnebenprodukt (212) zu erzeugen;
Trennen von Wasser von dem Kraftstoffnebenprodukt, um ein konditioniertes Kraftstoffnebenprodukt (214) und Wasser (114) zu erzeugen;
Verbrennen des konditionierten Kraftstoffnebenprodukts, um Wärme zu erzeugen; und
Bereitstellen der Energie, des Wassers und der Wärme zur Nutzung;
wobei das Bereitstellen des Wassers zur Nutzung das Bereitstellen des Wassers für das Biokraftstofferzeugungs-Subsystem zur Erzeugung des Biokraftstoffs umfasst, wobei das Verfahren ferner das Konditionieren des Kraftstoffs vor der Verwendung in der Brennstoffzelle umfasst, um konditionierten Kraftstoff für die Brennstoffzelle zu erzeugen.

2. Verfahren nach Anspruch 1, bei dem das Konditionieren des Kraftstoffs vor der Verwendung das Reformieren des Kraftstoffs und das Entfernen von Schwefel aus dem Kraftstoff umfasst.

3. Verfahren nach einem der Ansprüche 1- 2, bei dem das Trennen des Wassers von dem Kraftstoffnebenprodukt das Leiten des Kraftstoffnebenprodukts zu einem Separator (306) und das Trennen des Wasserdampfs von dem Kraftstoffnebenprodukt umfasst.

4. Verfahren nach Anspruch 1, bei dem das Verbrennen des konditionierten Kraftstoffnebenprodukts das Bereitstellen des konditionierten Kraftstoffnebenprodukts für einen Nachbrenner (310) und das Verbrennen des konditionierten Kraftstoffnebenprodukts zum Erzeugen eines Abgasstroms (216) umfasst.

5. Verfahren nach einem der Ansprüche 1-4, ferner umfassend das Leiten des Abgasstroms durch einen Turbokompressor (312), um Wärmeenergie in mechanische Energie umzuwandeln.

6. Verfahren nach Anspruch 5, ferner umfassend das Leiten des Abgasstroms zu einer Kraftstoffkonditionierungsphase (202) des Brennstoffzellensystems und das Bereitstellen von Wärme für einen endothermen Reformierungsprozess der Kraftstoffkonditionierungsphase.

7. System (110) zur Energie- und Wassererzeugung, umfassend:
ein Biokraftstofferzeugungs-Subsystem, das konfiguriert ist, um einen Biokraftstoff zu erzeugen;
eine Brennstoffzelle, die konfiguriert ist, um den Biokraftstoff in Strom und ein Kraftstoffnebenprodukt umzuwandeln;
eine Nebenprodukt-Trennphase (206), die stromabwärts der Brennstoffzelle angeordnet und konfiguriert ist, um Wasser von dem Kraftstoffnebenprodukt zu trennen, um Wasser und ein konditioniertes Kraftstoffnebenprodukt zu erzeugen; und
eine Brennerphase (208), die stromabwärts von der Nebenprodukt-Trennphase angeordnet und konfiguriert ist, um das konditionierte Kraftstoffnebenprodukt zu verbrennen, um Wärme zu erzeugen,
wobei das Biokraftstofferzeugungs-Subsystem konfiguriert ist, um das Wasser aufzunehmen, um Biokraftstoff zur Verwendung durch die Brennstoffzelle zu erzeugen;
wobei das System zur Energie- und Wassererzeugung ferner eine Kraftstoffkonditionierungsphase umfasst, die konfiguriert ist, um den Kraftstoff zu konditionieren, um konditionierten Kraftstoff für die Brennstoffzelle zu erzeugen.

8. System zur Energie- und Wassererzeugung nach Anspruch 7, bei dem die Nebenprodukt-Trennphase einen Separator umfasst, der konfiguriert ist, um Wasser von dem Kraftstoffnebenprodukt zu trennen, um Wasser zu erzeugen.

9. System zur Energie- und Wassererzeugung nach Anspruch 8, bei dem die Nebenprodukt-Trennphase ferner eine Wasseraufbereitungseinrichtung umfasst, die konfiguriert ist, um Trinkwasser aus dem Wasser zu erzeugen.

10. System zur Energie- und Wassererzeugung nach einem der Ansprüche 7 - 9, bei dem die Brennerphase einen Nachbrenner oder einen Turbokompressor umfasst, wobei der Nachbrenner konfiguriert ist, um das konditionierte Kraftstoffnebenprodukt mit Luft zu verbrennen, um einen Abgasstrom zu erzeugen, der die Wärme umfasst, und der Turbokompressor konfiguriert ist, um den Abgasstrom in mechanische Energie umzuwandeln.

11. System zur Energie- und Wassererzeugung nach Anspruch 10, bei dem die Brennerphase thermisch mit der Kraftstoffkonditionierungsphase gekoppelt ist, wobei die Kraftstoffkonditionierungsphase einen Reformer umfasst, der konfiguriert ist, um den Biokraftstoff für die Brennstoffzelle zu konditionieren.

## Revendications

1. Procédé de génération d'eau et d'énergie électrique dans un système de pile à combustible (110), le procédé comprenant les étapes consistant à :
produire du biocombustible (112) dans un sous-système de création de biocombustible (402) ;
recevoir et utiliser le biocombustible dans une pile à combustible (204) pour générer de l'énergie électrique (108) et un sous-produit de combustible (212) ;
séparer l'eau du sous-produit de combustible pour créer un sous-produit de combustible conditionné (214) et de l'eau (114) ;
brûler le sous-produit de combustible conditionné pour créer de la chaleur ; et
fournir l'énergie électrique, l'eau et la chaleur à utiliser ;
dans lequel la fourniture de l'eau à utiliser comprend la fourniture de l'eau au sous-système de création de biocombustible pour la production du biocombustible, dans lequel le procédé comprend en outre le conditionnement du combustible avant utilisation dans la pile à combustible afin de créer un combustible conditionné pour la pile à combustible.

2. Procédé selon la revendication 1, dans lequel le conditionnement du combustible avant utilisation comprend le reformage du combustible et l'élimination de soufre depuis le combustible.

3. Procédé selon l'une quelconque des revendications 1 à 2, dans lequel la séparation de l'eau à partir du sous-produit de combustible comprend l'acheminement du sous-produit de combustible vers un séparateur (306) et la séparation de la vapeur d'eau à partir du sous-produit de combustible.

4. Procédé selon la revendication 1, dans lequel la combustion du sous-produit de combustible conditionné comprend la fourniture du sous-produit de combustible conditionné à un post-brûleur (310) et la combustion du sous-produit de combustible conditionné pour créer un flux d'échappement (216).

5. Procédé selon l'une quelconque des revendications 1 à 4, comprenant en outre l'acheminement du flux d'échappement à travers un turbocompresseur (312) afin de transformer de l'énergie thermique en énergie mécanique.

6. Procédé selon la revendication 5, comprenant en outre l'acheminement du flux d'échappement vers une phase de conditionnement de combustible (202) du système de pile à combustible et la fourniture de chaleur à un processus de reformage endothermique de la phase de conditionnement de combustible.

7. Système de génération d'énergie électrique et d'eau (110) comprenant :
un sous-système de production de biocombustible configuré pour produire un biocombustible ;
une pile à combustible configurée pour convertir le biocombustible en énergie électrique et un sous-produit de combustible ;
une phase de séparation de sous-produit (206) positionnée en aval de la pile à combustible et configurée pour séparer l'eau à partir du sous-produit de combustible afin de créer de l'eau et un sous-produit de combustible conditionné ; et
une phase de combustion (208) positionnée en aval de la phase de séparation de sous-produit et configurée pour brûler le sous-produit de combustible conditionné afin de créer de la chaleur,
dans lequel le sous-système de production de biocombustible est configuré pour recevoir l'eau afin de produire le biocombustible à utiliser par la pile à combustible ;
dans lequel le système de génération d'énergie électrique et d'eau comprend en outre une phase de conditionnement de combustible configurée pour conditionner le combustible afin de créer du combustible conditionné pour la pile à combustible.

8. Système de génération d'énergie électrique et d'eau selon la revendication 7, dans lequel la phase de séparation de sous-produit comprend un séparateur configuré pour séparer l'eau à partir du sous-produit de combustible afin de créer de l'eau.

9. Système de génération d'énergie électrique et d'eau selon la revendication 8, dans lequel la phase de séparation de sous-produit comprend en outre un équipement de traitement d'eau configuré pour produire de l'eau potable à partir de l'eau.

10. Système de génération d'énergie électrique et d'eau selon l'une quelconque des revendications 7 à 9, dans lequel la phase de combustion comprend un dispositif de postcombustion ou un turbocompresseur, le dispositif de postcombustion étant configuré pour brûler le sous-produit de combustible conditionné avec de l'air pour créer un flux d'échappement comprenant la chaleur et le turbocompresseur étant configuré pour transformer le flux d'échappement en énergie mécanique.

11. Système de génération d'énergie électrique et d'eau selon la revendication 10, dans lequel la phase de combustion est couplée thermiquement à la phase de conditionnement de combustible, la phase de conditionnement de combustible comprenant un reformeur configuré pour conditionner le biocombustible pour la pile à combustible.
